# EUROPEAN PATENT APPLICATION

(11) **EP 2 133 173 A1**
(43) Date of publication of application: **16.12.2009**
(21) Application number: 09162435.3
(22) Date of filing: 10.06.2009
(51) Int. Cl.: B23Q 1/54

(54) **Rotary table for positioning workpieces on machine tools**

(30) Priority: 12.06.2008 ES 200801773
(71) Applicant: Ideko, S. Coop, 20870 Elgoibar Guipuzcoa (ES)
(72) Inventor: Olascoaga Arrate, Peio, 20870 Elgoibar, Guipuzcoa (ES); Gorostiaga Urcelay, Garbiñe, 20870 Elgoibar, Guipuzcoa (ES); Lizarralde Dorronsoro, Rafael, 20870 Elgoibar, Guipuzcoa (ES)
(74) Representative: Intes, Didier Gérard André

(57) **Abstract**

Table for positioning workpieces on machine tools, consisting of two different-diameter plates (2 and 3), the smaller diameter plate (2) being built into the larger diameter plate (3) and the assembly of these two plates being fitted to a fixed bed plate (4) the plates being driven in rotation independently.

## Description

### Technical sector

This invention concerns work tables to which workpieces on machine tools are secured. It consists of a work table with construction and functional characteristics making it truly advantageous for this type of application.

### State of the Art

In the manufacturing of workpieces by using machine tools and by cutting, the workpieces are laid out on the machine table so that, by using tools secured to a head and the relative movement between the tools and the workpieces, the workpieces are cut to the required shape. The carrier head of the machine tools is located to the front of the table where the workpieces are secured and can be moved with respect to the table freely in as many degrees and axes as required in order to perfectly manage the depth and trajectory of the machining.

The versatility and flexibility of the machine tool will be determined by the number, the layout, the characteristics and the useful stroke of the machine axes. Likewise, it is the precision of these axes, positioned relative to the workpiece and the tool which, in turn, gives the machine its precision.

On a machine tool both the tool and the workpiece can be moved according to the layout of the axes. An essential criterion in machining is that the tool must be able to be applied to any part of the workpiece, in general this is not the case given that the range of possible movement is usually given priority over the position of the axes.

In general, the rotation axes are usually used to allow machining from different angles or to produce a movement (between the cutting tool and the workpiece). In this second case, the rotational axes are used in combination with the linear axes to create revolution surfaces on the workpiece. In this type of setup, the need to generate different surfaces other than the revolution surface requires the number of machine axes to be increased, making it more complex and, as a result, less precise and reliable.

On the contrary, the linear travelling axes are usually necessary for machining of different elements of the workpiece. Usually, machines with only linear axes are used to carry out operations on prismatic pieces and are quite limited in the shapes that they can produce. Thus, in the patents FR 2 528 745 and FR 2 694 720, using a combination of the head and the two axes of movement of the work table, any part of the workpiece for machining can be reached with the tool.

However, it is unusual to use rotational axes to relatively position the workpiece and the tool with respect to each other in space.

### Subject of the invention

This invention concerns work tables of machine tools, to which workpieces are secured. It consists of a work table with construction and functional characteristics making it truly advantageous for this type of application.

The proposed work table consists of two circular plates of different diameter; the smaller diameter plate is built into the larger diameter plate and both are fitted to the bedplate of the machine.

The larger diameter plate is powered using drive from a motor which is preferably located below and which is concentric to the larger diameter plate of the machine. This plate is secured using bearings for guiding the rotational motion and several types of solutions for guiding could be used such as aero-static, mechanical, hydrostatic, magnetic, rails, slides, etc.

The smaller diameter plate is secured to a unit fitted with a motor which directly controls the rotational movement of this plate when operated.

Thus, the work table can be used for different operating modes depending on the final shape required for the part.

One of these operation modes is specifically designed to position the part relative to the machining head for subsequent machining. To achieve this, the rotational movement of both plates is controlled and the combined movements provide the correct machining position.

Another operation mode positions the part using the controlled rotation of the larger diameter plate while the smaller diameter plate rotates freely during machining, making operations on the part secured to the table easier.

Said work table, subject of the invention, is designed to be fitted to conventional type machine tools including a bed plate, a work table and a machining head, with the machining head being able to move in the Z axis, in and out in the direction of the work table, so that a three-dimensional work system is obtained by including the table.

This type of work table can also be used for machine tools with additional capacity for the movements, as well as movements in the Z axis, such as a rotational movement A, around the X-axis and a rotational movement E, around the Z-axis creating, so that a five-axis system is obtained by including the recommended work table.

Another possible solution for obtaining a five-axis system with the recommended work table and a conventional machine tool with a capacity for longitudinal head movement in the Z-axis, is to include a system with a rotation movement A around the X-axis, a rotation movement C around the Z-axis and a longitudinal movement along the Y-axis. Such a system, when fitted to the recommended work table with rotational movements C and D around the Z-axis, gives the same said conventional machine movement in 5 axes.

This system can either be fitted to the recommended work table in order to secure the workpiece to the rotating plate of the system, or be fitted to the recommended work table instead of the rotation plate for fitting the workpiece to the work table for its machining.

### Description of the diagrams

Figure 1 shows a perspective view of a machine tool fitted with the recommended work table with a three axis system.
Figure 2 shows a section view of the machine of the previous figure.
Figure 3 shows a perspective view of a machine tool fitted with the recommended work table for a five-axis system.
Figure 4 shows a complementary system for the machine tool system for which the invention is designed.
Figures 5 to 8 show different relative positions of the plates of the recommended work table according to their rotation.

### Detailed description of the invention

This invention concerns a work table of a machine tool, to which workpieces are secured, designed so that the machining head can be precisely applied to the workpiece to be machined and providing great precision for the machining.

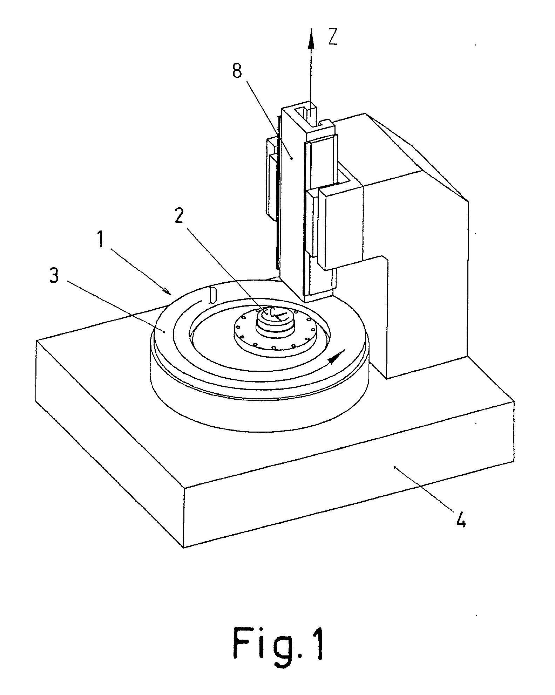

The recommended work table (1) is circular and made of two rotating plates (2 and 3) of different diameters; the smaller diameter plate (2) is eccentric to and built into the larger diameter plate (3) and the unit formed by the two plates (2 and 3) is placed on the bed plate (4) of the machine tool as shown in figure 1.

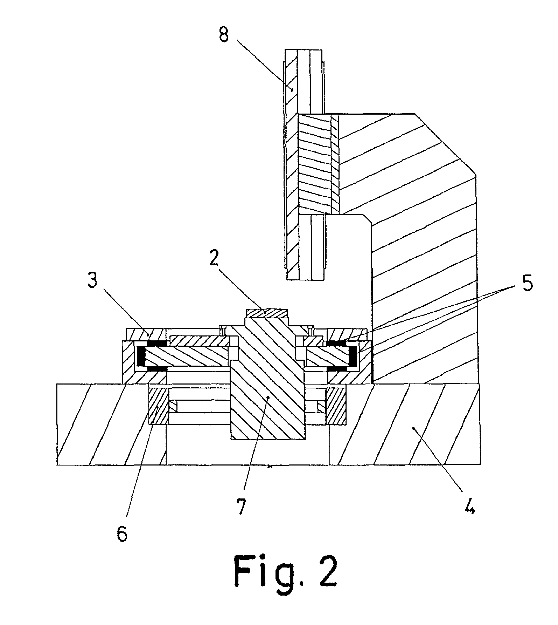

Figure 2 shows the assembly of the two component plates (2 and 3) of the invention's work table on the machine bed plate (4); the larger diameter plate (3) is preferably built using bearings (5) which guide its rotation. Several types of solutions could be used for the guides such as aero-static, mechanical, hydrostatic, magnetic, rails, slides, etc. Said larger diameter plate is coupled to a motor (6) powered driving transmission located concentrically underneath the larger diameter plate (3).

The smaller diameter plate (2) is coupled to a unit (7) which includes a driving motor used to drive this plate in rotation so that it can be controlled or not controlled.

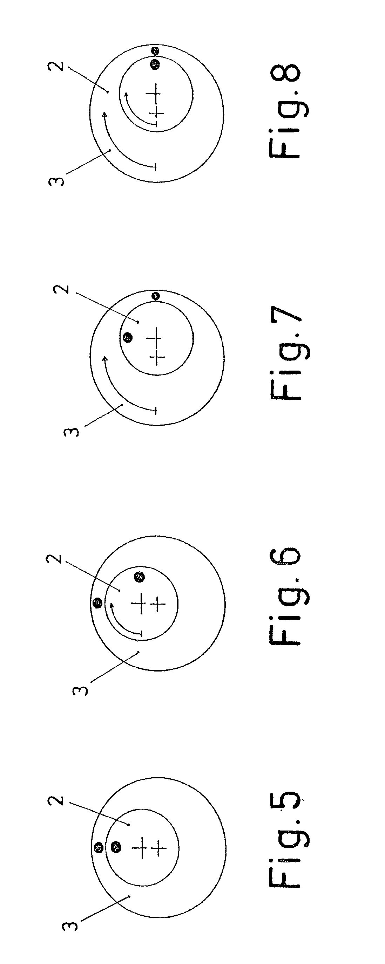

Thus, starting from an initial position as shown in figure 5, the smaller diameter plate (2) can be moved alone, as shown in figure 6; the larger diameter plate (3) can be moved alone, as shown in figure 7; and the assembly of the two plates (2 and 3) can be moved at the same time, as shown in figure 8.

Moreover, the work table (1) also has three encoders, two of which monitor the plate positions (2 and 3) during the approach to the machining position while the other, located on the smaller diameter plate (2) monitors when the axis rotates as a head, these encoders providing the machine tool control system with information for appropriate operation.

With this configuration, the movements of the two plates (2 and 3) can be combined to obtain different operation modes on the machine used to obtain different types of machining depending on the required final shape from the part.

In one operation mode, both plates are rotated in a controlled way, their movements being interpolated, the position and movement of the workpiece with respect to the machining head (8), being reached by the interpolation of the movements of both plates (2 and 3).

Another operation mode defines the controlled rotational movement of the larger diameter plate (3) to position the workpiece while the smaller diameter plate (2), once the workpiece is positioned relative to the machine tool head (8), rotates freely to allow the machining of the workpiece.

The work table (1) of the invention has been designed for conventional machine tools of the type comprising a head (8), a bed plate (4) and a work table, the head (8) being provided with a movement in the Z-axis towards and away from the work table (1), with its two rotational movements (C) and (D) around the Z-axis, thereby providing a three-axis machining system on the bed plate (4) of the machine, see figures 1 and 2.

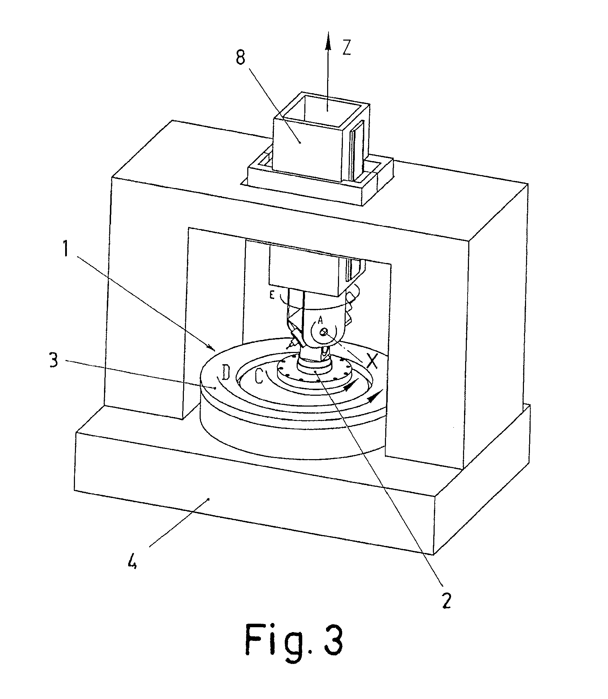

This work table (1) can also be used for machine tools such as the one shown in figure 3 which has, besides the movement in the Z-axis, machine head (8) movements complementary to those described above including a rotation movement (A) around the X-axis and a rotation movement (E) around the Z-axis resulting in a five-axis machine-tool system allowing any relative orientation and position between the machine-tool head (8) and the workpiece.

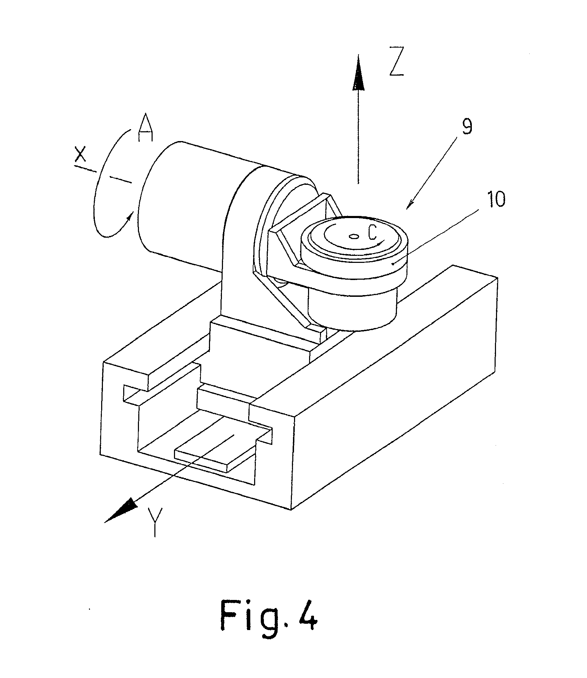

For conventional machine tools which, combined with the recommended work table (1), can be converted to a three axis system, it is intended to fit the work table (1) with a system (9) as shown in figure 4 provided with rotational movement (A) around the X-axis, a rotational plate (10) rotating (C) around the Z-axis to which the workpiece is secured and a longitudinal movement along the Y-axis for moving the workpiece towards and away from the machine machining head (8) support column thus providing said conventional three axis machine with movement in five axes.

Lastly, the rotational plate (10) of this system (9) can be replaced by the invention work table (1) which is fitted to the bed plate (4) of the machining machine.

## Claims

1. Table for positioning workpieces on machine tools, of the type providing rotational movement in front of the carrier head of the machine tool, **characterised by** two plates (2 and 3) of different diameters, with the smaller diameter plate (2) being eccentrically built into the larger diameter plate (3) while the assembly of both plates (2 and 3) is located on the machine bed plate (4), the smaller and larger diameter plates being independently driven in rotation.

2. Table for positioning workpieces on machine tools according to claim 1 and **characterised in that** the larger diameter plate (3) is fitted using bearings (5) that guide its rotation for which several solutions could be used for the guides such as aero-static, mechanical, hydrostatic, magnetic, rails, slides, etc, and **in that** the larger diameter plate is coupled to a motor (6) powered driving transmission which is located underneath and concentrically with said plate (3).

3. Table for positioning workpieces on machine tools according to claim 1 or 2, **characterised by** the fact that the smaller diameter plate (2) is coupled to a unit (7) with a driving motor providing controlled rotation or free rotation.

4. Table for positioning workpieces on machine tools, according to any one of claims 1 to 3, **characterised by** the fact that the assembly of both plates (2 and 3) is fitted with two encoders that monitor the position of said plates relative to the machining position, and another encoder located on the smaller diameter plate (2) that monitor the rotation of this plate (2) relative to the head.

5. Table for positioning workpieces on machine tools according to any one of claims 1 to 4, **characterised by** the fact that it may be fitted to a machine designed with an in/out movement in the Z-axis, thereby providing the machine with a three-axis system.

6. Table for positioning workpieces on machine tools according to any one of claims 1 to 4 **characterised by** the fact that it may be fitted to a machine designed with an in/out movement along the Z-axis and rotational movements of the machine carrier head, rotational movement (A) around the X-axis and rotational movement (E) around the Z-axis, which, when combined with the movements of the work table (1) provide a five-axis system.

7. Table for positioning workpieces on machine tools, **characterised by** the fact that the table has two operating modes, the first mode being an interpolation of the combined controlled movement of both plates (2 and 3) for positioning the workpiece before machining; the second mode providing a controlled or free movement of the larger diameter plate (3) for positioning of the workpiece and free movement of the smaller diameter plate (2) for machining.
